# EUROPEAN PATENT SPECIFICATION

(11) **EP 2 618 533 B1**
(45) Date of publication and mention of the grant of the patent: **02.03.2022**
(21) Application number: 11824479.7
(22) Date of filing: 23.05.2011
(51) Int. Cl.: H04W 76/22, H04L 29/06

(54) **METHOD AND SYSTEM FOR DETERMINING IP BEARER OPTIMIZATION BASED ON VIRTUAL MEDIA GATEWAY**
VERFAHREN UND SYSTEM ZUR BESTIMMUNG VON IP-TRÄGER-OPTIMIERUNGEN AUF BASIS EINES VIRTUELLEN MEDIEN-GATEWAYS
PROCÉDÉ ET SYSTÈME DE DÉTERMINATION D'OPTIMISATION DE SUPPORT IP SUR LA BASE D'UNE PASSERELLE MULTIMÉDIA VIRTUELLE

(30) Priority: 14.09.2010 CN 201010282154
(43) Date of publication of application: 24.07.2013
(73) Proprietor: ZTE Corporation, Shenzhen, Guangdong 518057 (CN)
(72) Inventor: ZENG, Shenggen, Shenzhen, Guangdong 518057 (CN); GE, Zhiming, Shenzhen, Guangdong 518057 (CN); DONG, Junxian, Shenzhen, Guangdong 518057 (CN); NING, Dongzi, Shenzhen, Guangdong 518057 (CN)
(74) Representative: Aipex B.V.
(86) International application number: PCT/CN2011/074535
(87) International publication number: WO 2012/034409

(56) References cited:
- EP-A1- 2 093 930
- CN-A- 1 878 150
- CN-A- 1 996 971
- US-A1- 2005 085 181
- US-A1- 2005 085 181

## Description

### Field of the Invention

The present invention relates to the field of communication, and in particular to a method and a system for determining Internet Protocol (IP) bearer optimization based on virtual media gateway.

### Background of the Invention

In the communication network system that separates bearer and control, control and bearer of the core network equipment are separated. Service is implemented on the control entity (e.g., Media Gateway Controller (MGC) in the soft switch network), and establishment of bearer is completed on Media GateWay (MGW).

According to protocol, at one moment, one MGW is controlled by only one MGC. If an MGW is controlled by multiple MGCs at the same time, it is needed to configure a physical MGW into multiple logical MGWs. Each logical MGW is called a virtual MGW (VMGW). The communication among multiple VMGWs on the same physical MGW is interoffice communication in the view of the MGC.

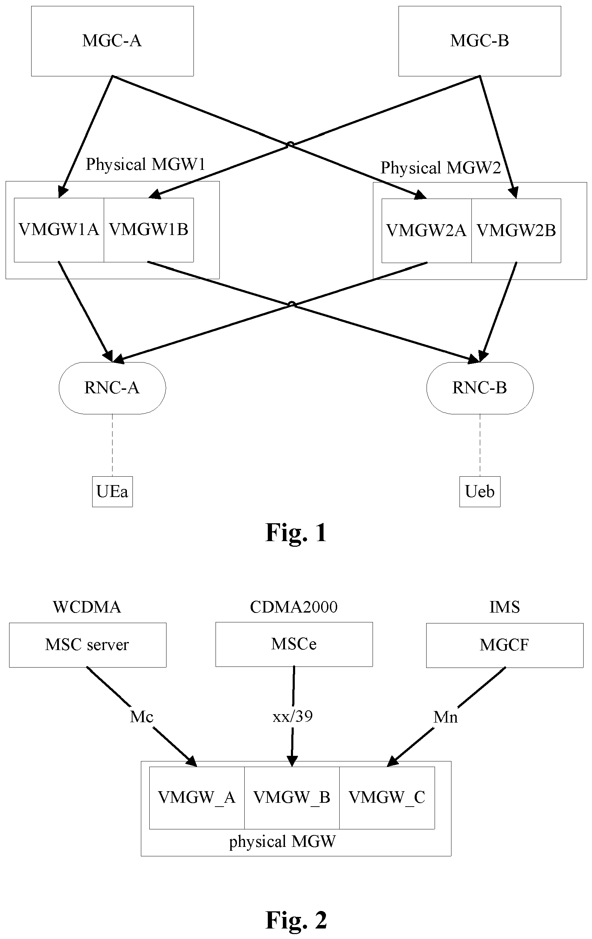

Fig. 1 shows a typical application scenario of equipment disaster tolerance. With the technology of virtual media gateway and the technology of Mobile Switch Controller (MSC) pool, fault of any single core network entity (such as, MGC, MGW, and Radio Network Controller (RNC)) will not influence the capability of providing call for user of the whole network. Thereby the reliability of the whole system is improved.

Fig. 2 shows a typical application scenario of integrated end office. With the technology of virtual media gateway, a physical media gateway is divided into multiple virtual media gateways. These multiple virtual media gateways are respectively controlled by the MGC of the Wideband Code Division Multiple Access (WCDMA), the CDMA2000, the IP Multimedia Subsystem (IMS) and the Next Generation Network (NGN) system, and provide service for the WCDMA, the CDMA2000, the IMS, the NGN and other systems. This solution saves cost for service provider supporting multiple systems.

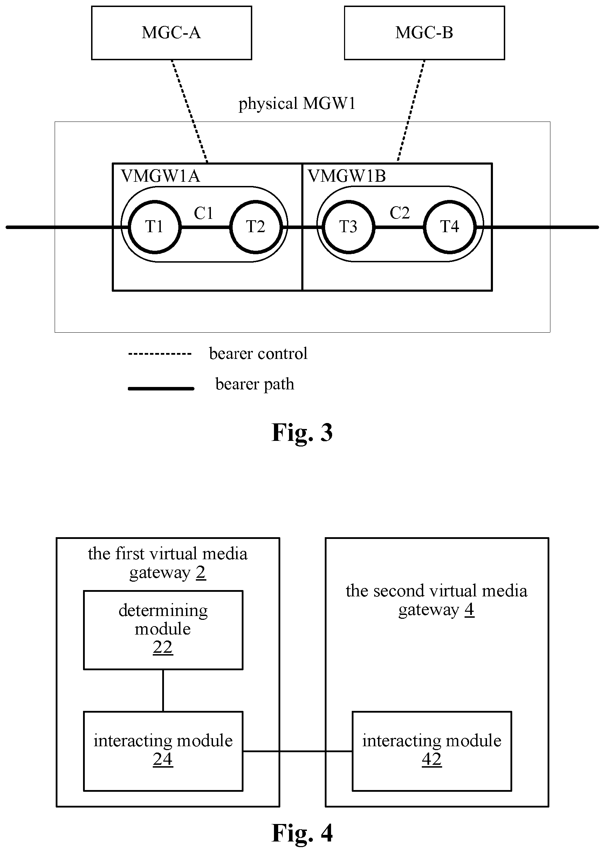

Taking the scenario of Fig. 1 for example, Fig. 3 illustrates the situation that the VMGWs respectively controlled by two MGCs are on the same physical gateway in the application scenario. The context C1 is established on a virtual media gateway VMGW1A, and controlled by a MGC-A. Terminals T1 and T2 belong to the context C1. The context C2 is established on a virtual media gateway VMGW1B, and controlled by a MGC-B. Terminals T3 and T4 belong to the context C2, wherein the terminals T2 and T3 realize connection between the virtual media gateways. The terminals T2 and T3 are on a physical device, but they still need to establish a bearer channel to connect, which wastes the resources on media gateway and increases the network delay.

For avoiding the problem, a solution of the related art is that: the internal bearer resources for intercommunication among the VMGWs are configured in the MGW. The media gateway controller obtains the configuration information. The MGW determines whether to operate internal endpoints according to the configuration information and message sent by the MGC. If it is determined that an internal endpoint is added, it is further determined whether its partner endpoint exists. If the partner endpoint exists, the contexts of the two internal endpoints are associated to combine into a context. When internal bearer information is forwarded in the MGW, only the combined context is used without processing of the internal endpoint. That is, information is forwarded directly between two external endpoints to achieve the aim of internal intercommunication.

The inventors find that adopting above technical solution, in one aspect, requires the MGC to indicate whether the MGW endpoint is internal or external endpoint. The MGW needs to make comprehensive determination according to the endpoint type and the configuration information. Thus, the configuration is complicated and the use is limited to the function of the MGC. In another aspect, for the situation that there are multiple physical MGWs at the same time, and each MGW is configured into multiple VMGWs, the internal endpoint information is configured on the physical MGW. When two VMGWs are not on the same physical MGW and they are unable to find the partner MGW, the call establishing exception will be caused.

The related document EP2093930 A1 discloses a method for optimizing network accessing of virtual media gateways VMGWs. The related document US 2005/085181 A1 discloses a method for connecting a call between virtual media gateways within a media gateway

### Summary of the Invention

The present invention provides a method and a system for determining IP bearer optimization based on virtual media gateway. The solution of the present invention may solve at least one of the above problems. The invention is defined by a method according to claim 1, a device according to claim 11 and a system according to claim 13. Further embodiments are defined by the dependent claims.

With the present invention, the media gateway automatically determines whether IP bearer optimization can be performed without the involvement of the MGC. This solution solves the problems of the related art, such as the need of planning internal resources, difficult application in the scenario of multiple physical MGWs and the limit of connection with MGC. Thereby, the waste of network resources is avoided, the network delay is reduced, and the voice quality is improved.

### Brief Description of the Drawings

The drawings described herein are used for providing a deeper understanding of the present invention, and constitute a part of the application. The schematic embodiments of the present invention and the description thereof are used for illustrating the present invention and are not intended to form improper limitation to the present invention. In the drawings:
Fig. 1 shows a diagram of performing equipment disaster tolerance by VMGW in related technologies;
Fig. 2 shows a diagram that VMGW serves as integrated end office in related technologies;
Fig. 3 shows a connection diagram of call between VMGW in related technologies;
Fig. 4 shows a structure diagram of a system for determining IP bearer optimization based on virtual media gateway according to an embodiment of the present invention;
Fig. 5 shows a structure diagram of a master virtual media gateway according to an embodiment of the present invention;
Fig. 6 shows a structure diagram of a slave virtual media gateway according to an embodiment of the present invention;
Fig. 7 shows a flowchart of a method for determining IP bearer optimization based on virtual media gateway according to an embodiment of the present invention;
Fig. 8 shows a connection diagram after using the method for determining IP bearer optimization provided by the embodiment of the present invention to perform IP bearer optimization; and
Fig. 9 shows a flowchart of an example of performing IP bearer optimization according to the method for determining IP bearer optimization provided by the embodiment of the present invention.

### Detailed Description of the Embodiments

The present invention is described below in detail with reference to the drawings and embodiments. It should be noted that the embodiments and the features in the embodiments of the application can be combined with each other if not conflicting. Embodiments not covered by the claims shall be seen as illustrative examples for a better understanding of the invention.

Fig. 4 shows a structure diagram of a system for determining IP bearer optimization based on virtual media gateway according to an embodiment of the present invention. As shown in Fig. 4, the system mainly includes: the first virtual media gateway 2 and the second virtual media gateway 4. In this case, the first virtual media gateway 2 can include: the determining module 22, configured to, when establishing the IP bearer for the first terminal, determine that the first terminal and the second terminal at the opposite end are located at the same physical media gateway according to the bearer information of the second terminal, and trigger the interacting module 24. For example, the determining module 22 can obtain the IP address and the port number recorded in the bearer information of the second terminal at the opposite end, and query whether the bearer resources corresponding to the IP address and the port number are on the physical media gateway, so as to determine whether the first terminal and the second terminal at the opposite end are located on the same physical media gateway. The interacting module 24 interacts with the second virtual media gateway 4, and determines which one of the first virtual media gateway 2 and the second virtual media gateway 4 is the master virtual media gateway, and which one is the slave virtual media gateway. The second virtual media gateway includes: the interacting module 42, configured to interact with the first virtual media gateway to determine the master virtual media gateway and the slave virtual media gateway.

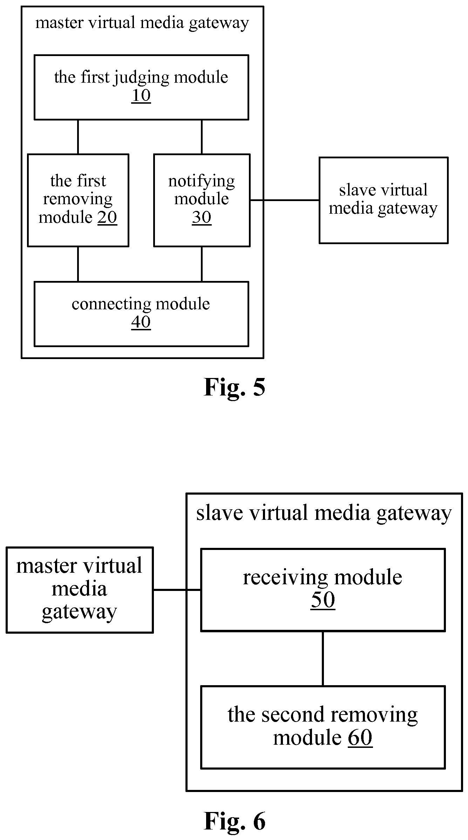

In the above, the structure diagram of the master virtual media gateway is as shown in Fig. 5, and the master virtual media gateway mainly includes: the first judging module 10, configured to determine whether both the first terminal and the second terminal can perform IP bearer optimization.

Preferably, the master virtual media gateway can further include the first removing module 20 and the notifying module 30, and the first judging module 10 triggers the first removing module 20 and the notifying module 30 when determining that both the first terminal and the second terminal can perform IP bearer optimization. The first removing module 20 is configured to remove the context connection, in the first context and the second context, corresponding to the master virtual media gateway, and release the bearer resources of the terminal, in the first terminal and the second terminal, on the master virtual media gateway. The notifying module 30 is configured to notify the slave virtual media gateway to remove the context connection, in the second context and the first context, corresponding to the slave virtual media gateway, and release the bearer resources of the terminal, in the second terminal and the first terminal, on the slave virtual media gateway. The connecting module 40 is configured to connect another terminal except the first terminal in the first context with another terminal except the second terminal in the second context.

Fig. 6 shows a structure diagram of a slave virtual media gateway. As shown in Fig. 6, in the embodiment of the present invention, the slave virtual media gateway mainly includes: the receiving module 50, configured to receive a notification from the notifying module 30, and trigger the second removing module 60; and the second removing module 60, configured to remove the context connection, in the second context and the first context, corresponding to the slave virtual media gateway, and release the bearer resources of the terminal, in the second terminal and the first terminal, on the slave virtual media gateway.

In the above, the master virtual media gateway can be either the first virtual media gateway, or the second virtual media gateway. It can be determined according to the interaction result of the interacting modules of the two virtual media gateways. The interacting module can determine which context is the master context and which context is the slave context according to the ID of the first context and the second context. For example, the interacting module can first determine parity of the ID of the first context and the second context, wherein the context whose ID is an odd number is the master context, and the context whose ID is an even number is the slave context. If parity of the ID of the first context and the second context is the same, then the context whose ID is greater is the master context, and the context whose ID is lesser is the slave context. The virtual media gateway to which the master context corresponds is the master virtual media gateway, and the virtual media gateway to which the slave context corresponds is the slave virtual media gateway. Or, the interacting module can also directly determine that the virtual media gateway initiating optimization (namely the first virtual media gateway 2) is the master virtual media gateway.

With the system provided by the embodiment of the present invention, the media gateway can automatically implement IP bearer optimization without the need of involving the MGC. This solution can avoid the problems such as planning of internal resources, the difficulty of application in the scenario of multiple physical MGWs, and can save network resources, and reduce network delay. Thereby the voice quality is improved.

In a preferred implementation of the embodiment of the present invention, the slave virtual media gateway can include a sending module, configured to, after the second removing module 60 removes the context connection and releases the bearer resources, notify the master virtual media gateway. After receiving the notification, if the first removing module 20 completes removing the connection relationship, the master virtual media gateway triggers the connecting module 40. Adopting the implementation can enable the master virtual media gateway to establish a new connection in time.

In another preferred implementation of the embodiment of the present invention, the slave virtual media gateway can further include a second judging module, configured to determine whether the terminal, in the first terminal and the second terminal, on the slave virtual media gateway can perform IP bearer optimization, and notify the master virtual media gateway of the determination result through the interacting module 42 of the slave virtual media gateway. The first judging module 10 of the master virtual media gateway can determine whether the first terminal and the second terminal can perform IP bearer optimization by the following way: the first judging module 10 determines whether the terminal which is on the master virtual media gateway can perform IP bearer optimization, and learns whether the terminal which is on the slave virtual media gateway can perform IP bearer optimization according to the interaction between the interacting module 24 of the master virtual media gateway and the slave virtual media gateway. In this case, the first judging module can determine whether the terminal, in the first terminal and the second terminal, on the master virtual media gateway can perform IP bearer optimization by determining whether the bearer established by the terminal of the context to which the master virtual media gateway corresponds is the IP bearer, and whether both terminals of the context have not performed IP bearer optimization. Specifically, if the bearer established by the terminal of the context is the IP bearer, and both terminals of the context have not performed IP bearer optimization, then the terminal which is on the master virtual media gateway can perform IP bearer optimization. Similarly, the second judging module can also adopt the similar way to determine whether the terminal which is on the slave virtual media gateway can perform IP bearer optimization. By adopting this implementation, the master virtual media gateway and the slave virtual media gateway can determine whether the terminal on it can perform IP bearer optimization respectively, thereby reducing interaction.

In another preferred implementation of the embodiment of the present invention, the slave virtual media gateway can also send to the master virtual media gateway the context information of the terminal, in the first terminal and the second terminal, on the slave virtual media gateway, terminal information of the context, and information about whether two terminals of the context have performed IP bearer optimization. By the above way, the first judging module 20 can determine according to these information whether the terminal which is on the slave virtual media gateway has performed IP bearer optimization.

In the above implementations, when the first removing module or the second removing module releases the bearer resources of the first terminal or the second terminal, if there is an encoding-decoding converter in the first terminal or the second terminal, then in another preferred implementation of the embodiment of the present invention, the first removing module and the second removing module can also release the encoding-decoding converter of the first terminal or the second terminal. This solution can save the resources, reduce the loss of voice in the encoding-decoding converter, and improve the voice quality.

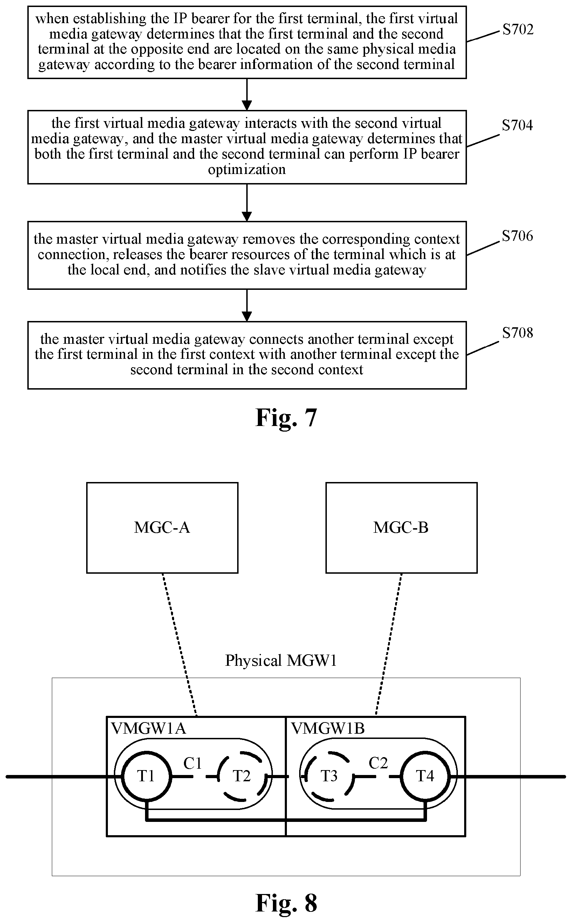

Fig. 7 shows a flowchart of a method for determining IP bearer optimization based on virtual media gateway according to an embodiment of the present invention. The method can be realized through the above system. As shown in Fig. 7, the method mainly includes the following steps.

Step S702: when establishing the IP bearer for the first terminal, the first virtual media gateway determines that the first terminal and the second terminal at the opposite end are located on the same physical media gateway according to the bearer information of the second terminal.

For example, in Fig. 3, the MGC-A sends the bearer information of the opposite end T3 to the terminal T2 on the VMGW1A. The VMGW1A establishes the IP bearer for the terminal T2, obtains the IP address and port number of T3 according to the bearer information of T3, and queries whether the bearer resources corresponding to the IP address and port number are on the physical media gateway to which the VMGW1A belongs, so as to determine whether T2 and T3 are located on the same physical media gateway.

Step S704: the first virtual media gateway interacts with the second virtual media gateway to which the second terminal belongs. The master virtual media gateway in the first virtual media gateway and the second virtual media gateway determines that both the first terminal and the second terminal can perform IP bearer optimization.

For example, in Fig. 3, the VMGW1A interacts with the VMGW1B, and determines that the VMGW1A is the master virtual media gateway. In the process that the VMGW1A interacts with the VMGW1B, the VMGW1A and the VMGW1B can exchange the ID of the first context C1 between T1 and T2 and the ID of the second context C2 between T3 and T4, and determine whether the VMGW1A or the VMGW1B is the master virtual media gateway according to the IDs of C1 and C2. In this example, the VMGW1A is determined to be the master virtual media gateway, namely the master virtual media gateway and the slave virtual media gateway are determined by determining the master context and the slave context in the first context and the second context. Or, it is also feasible to directly determine that the VMGW (namely the VMGW1A) initiating the IP bearer optimization is the master virtual media gateway. In addition, there may also be other rules to determine the master and slave virtual media gateways.

Then, the master virtual media gateway determines whether the terminal, in the first terminal and the second terminal, on the master virtual media gateway can perform IP bearer optimization. If yes, the master virtual media gateway notifies the slave virtual media gateway to report the slave context information. The slave virtual media gateway determines that the terminal, in the first terminal and the second terminal, on the slave virtual media gateway can perform IP bearer optimization, notifies the master virtual media gateway, and sends the slave context information to the master virtual media gateway. Then, the master virtual media gateway can determine whether both the first terminal and the second terminal can perform IP bearer optimization.

In the above, the conditions that a terminal can perform IP bearer optimization are as follows: (1) whether the bearer established by the terminal is the IP bearer; and (2) whether both terminals of the context have not performed IP bearer optimization. If both determination results of the above two points are yes, then the terminal can perform IP bearer optimization.

Step S706: the master virtual media gateway removes the context connection, in the first context and the second context, corresponding to the master virtual media gateway, releases the bearer resources of the terminal, in the first terminal and the second terminal, at the local end, and notifies the slave virtual media gateway in the first virtual media gateway and the second virtual media gateway to remove the other context connection in the first context and the second context and release the bearer resources of the other terminal in the first terminal and the second terminal.

After receiving notification of the master virtual media gateway, the slave virtual media gateway removes the context connection, in the first context and the second context, corresponding to the slave virtual media gateway, and releases the bearer resources of the terminal, in the first terminal and the second terminal, on the slave virtual media gateway.

When releasing the bearer resources of the terminal, the master virtual media gateway and the slave virtual media gateway can further determine whether there is the encoding-decoding converter (TC) in the terminal. If yes, it is released too. In addition, when releasing the bearer resources, the master virtual media gateway and the slave virtual media gateway keep the terminal, but the terminal does not participate in the context connection.

Step S708: the master virtual media gateway connects another terminal except the first terminal in the first context with another terminal except the second terminal in the second context.

For example, the slave virtual media gateway can notify the master virtual media gateway after releasing the bearer resources of the terminal. After receiving the notification, the master virtual media gateway connects other terminals except the first terminal and the second terminal in the first context and the second context.

Fig. 8 shows a connection diagram after using the method provided by the embodiment of the present invention as shown in Fig. 3 to perform bearer optimization to call between the VMGWs. As shown in Fig. 8, after adopting the method for determining IP bearer optimization provided by the embodiment of the present invention, a bearer path can be established directly between T1 and T4, instead of establishing a bearer path of T1-T2-T3-T4.

With the method provided by the embodiment of the present invention, the media gateway can automatically implement IP bearer optimization without the need of involving the MGC. This solution can avoid the problems such as planning of internal resources, the difficulty of application in the scenario of multiple physical MGWs, and can save network resources, and reduce network delay. Thereby, the voice quality is improved.

The method for determining IP bearer optimization based on virtual media gateway provided by the embodiment of the present invention is described below by taking Fig. 3 as an example. In Fig. 3, the VMGWs respectively controlled by two MGCs are on the same physical media gateway MGW1. The MGC-A controls the virtual media gateway VMGW1A, and the MGC-B controls the virtual media gateway VMGW1B. The context C1 is established on the VMGW1A and controlled by the MGC-A. The terminals T1 and T2 belong to the context C1. The context C2 is established on the VMGW1B and controlled by the MGC-B. The terminals T3 and T4 belong to the context C2. The terminals T2 and T3 implement connection between the virtual media gateways.

According to the above method provided by the embodiment of the present invention, automatic IP bearer optimization between the virtual media gateways is triggered when the terminal begins to establish the IP bearer. When a single MGC sends remote bearer information to the terminal on the VMGW, the VMGW queries whether the remote bearer belongs to this physical gateway. If yes, it is indicated that the terminal is an optimization terminal, otherwise, the terminal is an entity terminal. If the terminal is an optimization terminal, the context and terminal information of the remote terminal is queried according to the remote bearer information. According to this information, the contexts to which the optimization terminal belongs can communicate with each other to establish the master-slave relationship and determine whether it is feasible to perform bearer optimization. These contexts interchange with each other in the process of bearer optimization until the optimization is completed. From triggering to completion of the optimization, the MGC is not needed at all, and the whole process is not visible to the MGC.

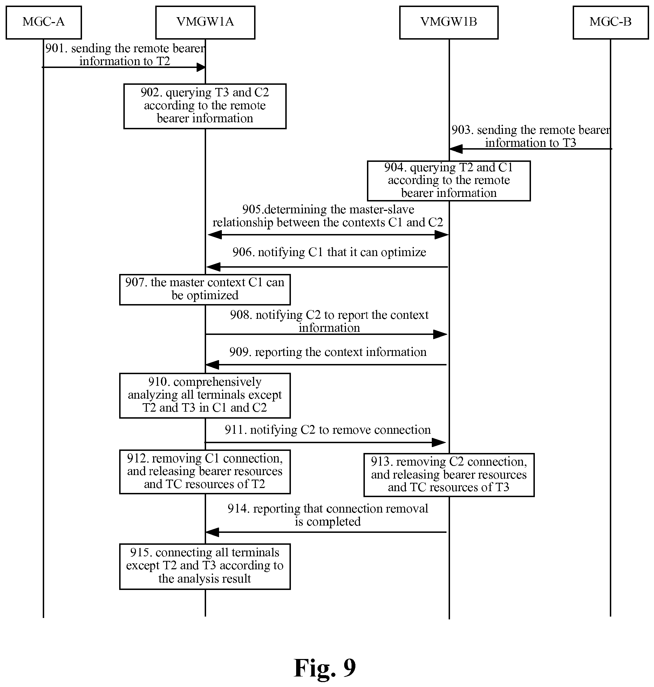

Fig. 9 shows a signalling flowchart of optimizing the IP bearer shown in Fig. 3. As shown in Fig. 9, optimizing the IP bearer shown in Fig. 3 mainly includes the following steps.

Step S901: the MGC-A sends the remote bearer information to the terminal T2 on the VMGW1A.

Step S902: T2 learns that it itself is an optimization terminal according to the remote bearer information, so that T2 queries the context and terminal information of the opposite end of the bearer on the physical gateway MGW1 according to the remote bearer information.

Step S903: the MGC-B sends the remote bearer information to the terminal T3 on the VMGW1B.

Step S904: T3 learns that it itself is an optimization terminal according to the remote bearer information, so that T3 queries the context and terminal information of the opposite end of the bearer on the physical gateway MGW1 according to the remote bearer information.

Step S905: the VMGW1A and the VMGW1B can communicate with each other through the remote bearer information, and determine through interaction that C1 is the master context, C2 is the slave context, the VMGW1A is the master VMGW, and the VMGW1B is the slave VMGW.

Step S906: the VMGW1B determines that it itself is the slave VMGW, and there is no terminal which has performed IP bearer optimization in its context C2, and notifies the VMGW1A that T3 can perform IP bearer optimization.

Step S907: the VMGW1A determines that T2 can also perform optimization, and both C1 and C2 meet the optimization condition, and then begins to perform optimization.

Step S908: the VMGW1A notifies the VMGW1B to report the information of the context C2.

Step S909: the VMGW1B reports the information of the context C2 to the VMGW1A.

Step S910: the VMGW1A comprehensively analyzes information of other terminals except the optimization terminals T2 and T3 in the contexts C1 and C2, and obtains result about how the contexts should be connected. That is, T1 connects directly with T4.

Step S911: after completion of analysis, notifying the VMGW1B to remove connection of the context C2.

Step S912: the VMGW1A removes connection of the context C1, and releases bear resources and TC resources of the optimization terminal T2.

Step S913: the VMGW1B removes connection of the slave context C2, and releases bear resources and TC resources of the optimization terminal T3.

Step S914: after completing connection removal, the VMGW1B notifies the VMGW1A.

Step S915: after connections of all contexts are removed, the VMGW1A connects call connections according to the analysis result.

After optimizing the IP bearer, the MGC also performs various operations to the terminals on the VMGW, such as playback, receiving number, adding terminal, deleting terminal, modifying TOPO and MOVE terminals. In the embodiment of the present invention, although the bearer is optimized, it is needed to ensure that the operation sent by the MGC is completed correctly, and the operation result is consistent with that before the optimization. Thus, in the embodiment of the present invention, the following operations can be performed respectively according to different terminal objects of the operation.

### (1) True terminal of master context

After a true terminal (T1) of the master context receives the operation, the terminal exists, and the bearer is normal. It is processed according to the normal flow, without connecting the context. After updating the operation information, the VMGW1A comprehensively analyzes the relationship between the master context and the slave context, and connects according to the latest analysis result.

If it is the MOVE operation, moving directly the terminal T1 from C1.

### (2) Optimization terminal of master context

After an optimization terminal (T2) of the master context receives the operation, the terminal exists, and the bearer does not exist. If the operation has requirement for the bearer, it is processed normally according to the bearer. After updating the operation information, the relationship between the master context and the slave context is comprehensively analyzed, and connecting is performed according to the latest analysis result.

If it is the MOVE operation, after moving the terminal T2 from C1 to C3, it is needed to notify T3 of the new ID of context, and re-establish the master-slave relationship between C3 and C2.

### (3) True terminal of slave context

After a true terminal (T4) of the slave context receives the operation, the terminal exists, and the bearer is normal. It is processed according to the normal flow, without connecting the context. The new information is sent to the master context, and the master context comprehensively analyzes the relationship between the master context and the slave context, and connects according to the latest analysis result.

If it is the MOVE operation, after moving the terminal T4 from C2, it is needed to notify the VMGW1A to remove information of the terminal T4.

### (4) Optimization terminal of slave context

After an optimization terminal (T3) of the slave context receives the operation, the terminal exists, and the bearer does not exist. If the operation has requirement for the bearer, it is processed normally according to the bearer. The new information is sent to the master context, and the master context comprehensively analyzes the relationship between the master context and the slave context, and connects according to the latest analysis result.

If it is the MOVE operation, after moving the terminal T3 from C2 to C3, it is needed to notify the VMGW1A of the new ID of context, and re-establish the master-slave relationship between C1 and C3.

### (5) Operation related to context

For operation such as modifying TOPO, the master virtual media gateway directly updates information, comprehensively analyzes the relationship between the master context and the slave context, and connects according to the latest analysis result. After updating the slave context information, the slave virtual media gateway notifies the master virtual media gateway of the new information. The master virtual media gateway comprehensively analyzes the updated relationship between the master context and the slave context, and connects according to the latest analysis result.

In practical application, the optimization terminal may also be released after optimizing the IP bearer. After the optimization terminal is released, there is no basis for IP bearer optimization, so that it is needed to remove the association between the master context C1 and the slave context C2. For example, when the optimization terminal T2 of the master context C1 is released first, after removing the comprehensive connection relationship on C1, the slave virtual media gateway is notified to reanalyze and connect, release the terminal T2, and reanalyze C1 and connect. After receiving the message, the slave virtual media gateway reanalyzes and connects. When the optimization terminal T3 of the slave context C2 is released first, the master virtual media gateway is notified that the optimization terminal will be released. After receiving the message, the master virtual media gateway reanalyzes C1 and connects after removing the comprehensive connection relationship on C1, and notifies the slave virtual media gateway that the removing processing is completed. After receiving the message, the slave virtual media gateway releases the terminal T3, reanalyzes C2 and connects.

It can be seen from above description that with the embodiments of the present invention, the media gateway automatically implements IP bearer optimization without the need of involving the MGC. This solution solves the problems of the related art, such as the need of planning internal resources, the difficulty of application in the scenario of multiple physical MGWs and limit of connection with MGC. Thereby, the waste of network resources is avoided, the network delay is reduced, and the voice quality is improved.

Obviously, those skilled in the art should appreciate that the above-mentioned modules and steps of the present invention can be realized by a general-purpose computing device. They can be centralized in a single computing device or distributed on a network composed of multiple computing devices. Optionally, they can be realized by program code which is capable of being executed by the computing device, so that they can be stored in a storage device to be executed by the computing device. In addition, under some conditions, the presented or described steps can be executed in an order different from that described here. Or, they are made into integrated circuit modules, respectively. Or, multiple modules and steps of them are made into a single integrated circuit module to realize. In this way, the present invention is not limited to any particular combination of hardware and software.

## Claims

1. A method for determining Internet Protocol, IP, bearer optimization performed by a virtual media gateway, comprising:
determining, by a first virtual media gateway when establishing an IP bearer for a first terminal, that the first terminal and a second terminal are located at a same physical media gateway according to bearer information of the second terminal, wherein the second terminal is an opposite end of the first terminal, the bearer information of the second terminal comprises: IP address and the port number; and
interacting, by the first virtual media gateway, with a second virtual media gateway to which the second terminal belongs, and determining, by a master virtual media gateway, that both the first terminal and the second terminal can perform IP bearer optimization, wherein the master virtual media gateway is one of the first virtual media gateway and the second virtual media gateway.

2. The method according to claim 1, **characterized in that** determining, by the master virtual media gateway, that both the first terminal and the second terminal can perform IP bearer optimization comprises:
interacting, by the first virtual media gateway, with the second virtual media gateway, and determining, by the first virtual media gateway, that a first context or a second context is a master context, wherein the virtual media gateway to which the master context belongs is the master virtual media gateway, the other context is a slave context, and the virtual media gateway to which the slave context belongs is a slave virtual media gateway;
determining, by the master virtual media gateway, that a terminal, in the first terminal and the second terminal, on the master virtual media gateway can perform IP bearer optimization, and notifying, the master virtual media gateway, the slave virtual media gateway to report slave context information; and
determining, by the slave virtual media gateway, that a terminal, of the first terminal and the second terminal, on the slave virtual media gateway can perform IP bearer optimization, notifying the master virtual media gateway, and reporting the slave context information to the master virtual media gateway.

3. The method according to claim 2, **characterized in that**
determining that the first terminal can perform IP bearer optimization comprises: determining that a bearer established by the first terminal of the first context is the IP bearer, and both terminals of the first context have not performed IP bearer optimization; and
determining that the second terminal can perform IP bearer optimization comprises: determining that a bearer established by the second terminal of the second context is the IP bearer, and both terminals of the second context have not performed IP bearer optimization.

4. The method according to claim 2, **characterized in that** after the master virtual media gateway determines that both the first terminal and the second terminal can perform IP bearer optimization, the method further comprises:
removing, by the master virtual media gateway, a context connection, in the first context and the second context, corresponding to the master virtual media gateway, releasing bearer resources of the terminal, in the first terminal and the second terminal, at a local end, and notifying the slave virtual media gateway to remove the other context connection in the first context and the second context and release the bearer resources of the other terminal in the first terminal and the second terminal; and
connecting,by the master virtual media gateway, a third terminal with a fourth terminal, wherein the third terminal is a another terminal except the first terminal in the first context, the fourth terminal is another terminal except the second terminal in the second context.

5. The method according to claim 4, **characterized in that** after connecting a third terminal with a fourth terminal, the method further comprises:
receiving, by another terminal except the first terminal or the second terminal in the master context an operating instruction from a media gateway controller; and
executing, by the another terminal except the first terminal or the second terminal in the master context the operating instruction, not connecting a context, and performing connecting according to a relationship between the master context and the slave context after updating operating information;
wherein if the operating instruction is a moving operation, the master virtual media gateway directly removes the another terminal except the first terminal or the second terminal in the master context from the master context.

6. The method according to claim 4, **characterized in that** after connecting a third terminal with a fourth terminal, the method further comprises:
receiving, by the first terminal or the second terminal in the master context an operation instruction from a media gateway controller; and
executing, by the first terminal or the second terminal in the master context the operating instruction, and performing connecting according to a relationship between the master context and the slave context after updating operating information;
wherein if the operating instruction is a moving operation, after moving the first terminal or the second terminal in the master context to another context, the master virtual media gateway notifies the slave virtual media gateway of ID of the another context; and the slave virtual media gateway interacts with the virtual media gateway to which the another context corresponds, and determines a new master context and a new slave context.

7. The method according to claim 4, **characterized in that** after connecting a third terminal with a fourth terminal, the method further comprises:
Receiving, by another terminal except the first terminal or the second terminal in the slave context, an operating instruction from a media gateway controller; and
executing, by the another terminal except the first terminal or the second terminal in the slave context the operating instruction, not connecting a context, and notifying the master virtual media gateway after updating operating information; and the master virtual media gateway performing connecting according to a relationship between the master context and the slave context;
wherein if the operating instruction is a moving operation, the slave virtual media gateway notifies the master virtual media gateway after removing the another terminal except the first terminal or the second terminal in the slave context from the slave context.

8. The method according to claim 4, **characterized in that** after connecting a third terminal with a fourth terminal, the method further comprises:
receiving, by the first terminal or the second terminal in the slave context, an operation instruction from a media gateway controller; and
executing, by the first terminal or the second terminal in the slave context, the operating instruction, and notifying the master virtual media gateway after updating operating information; and performing, by the master virtual media gateway connecting according to a relationship between the master context and the slave context;
wherein if the operating instruction is a moving operation, after moving the first terminal or the second terminal in the slave context to another context, the slave virtual media gateway notifies the master virtual media gateway of ID of the another context; and the master virtual media gateway interacts with the virtual media gateway to which the another context corresponds, and determines a new master context and a new slave context.

9. The method according to claim 4, **characterized in that** after notifying the slave virtual media gateway to remove the other context connection in the first context and the second context and release the bearer resources of the other terminal in the first terminal and the second terminal, the method further comprises: the slave virtual media gateway removing the other context connection in the second context and the first context, and releasing the bearer resources of the other terminal in the second terminal and the first terminal.

10. The method according to any one of claims 4 to 9, **characterized in that** when releasing the bearer resources of the first terminal or the second terminal, the method further comprises: determining whether there is an encoding converter in the first terminal or the second terminal; and if yes, releasing the encoding converter.

11. A device for determining Internet Protocol, IP, bearer optimization comprised in a virtual media gateway, comprising:
a determining module (22), configured to determine, when establishing an IP bearer for a first terminal, that the first terminal and a second terminal are located at a same physical media gateway according to bearer information of the second terminal, wherein the second terminal is an opposite end of the first terminal, the bearer information of the second terminal comprises: IP address and the port number;
an interacting module (24), configured to interact with a virtual media gateway at the opposite end; and
a first judging module (10), configured to determine whether both the first terminal and the second terminal can perform IP bearer optimization.

12. The device according to claim 11, **characterized by** further comprising:
a first removing module (20), configured to, when the first judging module determines that both the first terminal and the second terminal can perform IP bearer optimization, remove a context connection, in a first context and a second context, corresponding to the virtual media gateway at a local end, and release bearer resources of a terminal, in the first terminal and the second terminal, on the virtual media gateway at the local end;
a notifying module (30), configured to, when the first judging module determines that both the first terminal and the second terminal can perform IP bearer optimization, notify the virtual media gateway at the opposite end to remove the context connection, in the second context and the first context, corresponding to the virtual media gateway at the opposite end, and release the bearer resources of the terminal, in the first terminal and the second terminal, on the virtual media gateway at the opposite end;
a connecting module (40), configured to connect another terminal except the first terminal in the first context with another terminal except the second terminal in the second context; and
a receiving module (50), configured to receive a notification from the notifying module.

13. A system for determining IP bearer optimization for virtual media gateways, comprising:
a first virtual media gateway (2), which comprises a device according to claim 11; and
a second virtual media gateway (4) comprising:
an interacting module (42), configured to interact with a virtual media gateway of the opposite end, and determine that one of the first virtual media gateway (2) and the second virtual media gateway (4) is a master virtual media gateway, and the other is a slave virtual media gateway;
wherein the interacting module (24) of the device of the first virtual media gateway (2) is further configured to determine that one of the first virtual media gateway (2) and the second virtual media gateway (4) is a master virtual media gateway, and the other is a slave virtual media gateway; and
the master virtual media gateway comprises:
a first judging module (10), configured to determine whether both the first terminal and the second terminal can perform IP bearer optimization.

14. The system according to claim 13, **characterized in that**
the master virtual media gateway further comprises:
a first removing module (20), configured to trigger, when the first judging module (10) determines that both the first terminal and the second terminal can perform IP bearer optimization, to remove a context connection, in the first context and the second context, corresponding to the master virtual media gateway, and release bearer resources of a terminal, in the first terminal and the second terminal, on the master virtual media gateway;
a notifying module (30), configured to trigger, when the first judging module (10) determines that both the first terminal and the second terminal can perform IP bearer optimization, to notify the slave virtual media gateway to remove the context connection, in the second context and the first context, corresponding to the slave virtual media gateway, and release the bearer resources of the terminal, in the first terminal and the second terminal, on the slave virtual media gateway; and
a connecting module (40), configured to connect another terminal except the first terminal in the first context with another terminal except the second terminal in the second context; and
the slave virtual media gateway comprises:
a receiving module (50), configured to receive a notification from the notifying module, and trigger a second removing module; and
the second removing module (60), configured to remove the context connection, in the second context and the first context, corresponding to the slave virtual media gateway, and release the bearer resources of the terminal, in the second terminal and the first terminal, on the slave virtual media gateway.

15. The system according to claim 14, **characterized in that**
the slave virtual media gateway further comprises:
a second judging module, configured to determine whether the terminal, in the first terminal and the second terminal, on the slave virtual media gateway can perform IP bearer optimization, and notify the master virtual media gateway of a determination result through the interacting module of the slave virtual media gateway; and wherein
the first judging module (10) is configured to determine whether the terminal, in the first terminal and the second terminal, on the master virtual media gateway can perform IP bearer optimization, and learn whether the terminal, in the first terminal and the second terminal, on the slave virtual media gateway can perform IP bearer optimization according to interaction between the interacting module of the master virtual media gateway and the slave virtual media gateway.

## Patentansprüche

1. Verfahren zum Bestimmen von Internet-Protokoll (IP)-Träger-Optimierung, durchgeführt von einem virtuellen Medien-Gateway, umfassend:
Bestimmen, durch ein erstes virtuelles Medien-Gateway beim Einrichten eines IP-Trägers für ein erstes Endgerät, dass sich das erste Endgerät und ein zweites Endgerät gemäß Trägerinformationen des zweiten Endgeräts an demselben physischen Medien-Gateway befinden, wobei das zweite Endgerät ein gegenüberliegendes Ende des ersten Endgeräts ist, wobei die Trägerinformationen des zweiten Endgeräts umfassen: IP-Adresse und die Anschlussnummer; und
Interagieren durch das erste virtuelle Medien-Gateway mit einem zweiten virtuellen Medien-Gateway, zu dem das zweite Endgerät gehört, und Bestimmen durch ein virtuelles Master-Medien-Gateway, dass sowohl das erste Endgerät als auch das zweite Endgerät eine IP-Träger-Optimierung durchführen können, wobei das virtuelle Master-Medien-Gateway eines von dem ersten virtuellen Medien-Gateway und dem zweiten virtuellen Medien-Gateway ist.

2. Verfahren nach Anspruch 1, **dadurch gekennzeichnet, dass** das Bestimmen durch das virtuelle Master-Mediengateway, dass sowohl das erste Endgerät als auch das zweite Endgerät eine IP-Träger-Optimierung durchführen können, Folgendes umfasst:
Interagieren durch das erste virtuelle Medien-Gateway mit dem zweiten virtuellen Medien-Gateway und Bestimmen durch das erste virtuelle Medien-Gateway, dass ein erster Kontext oder ein zweiter Kontext ein Master-Kontext ist, wobei das virtuelle Medien-Gateway, zu dem der Master-Kontext gehört, das virtuelle Master-Medien-Gateway ist, der andere Kontext ein Slave-Kontext ist und das virtuelle Medien-Gateway, zu dem der Slave-Kontext gehört, ein virtuelles Slave-Medien-Gateway ist;
Bestimmen durch das virtuelle Master-Medien-Gateway, dass ein Endgerät im ersten Endgerät und im zweiten Endgerät am virtuellen Master-Medien-Gateway eine IP-Träger-Optimierung durchführen kann, und Benachrichtigen des virtuellen Master-Medien-Gateways an das virtuelle Slave-Medien-Gateway, um Slave-Kontextinformationen zu melden; und
Bestimmen durch das virtuelle Slave-Media-Gateway, dass ein Endgerät des ersten Endgeräts und des zweiten Endgeräts auf dem virtuellen Slave-Media-Gateway eine IP-Träger-Optimierung durchführen kann, Benachrichtigen des virtuellen Master-Media-Gateways und Melden der Slave-Kontextinformationen an das virtuelle Master-Media-Gateway.

3. Verfahren nach Anspruch 2, **dadurch gekennzeichnet, dass**
Bestimmen, dass das erste Endgerät die IP-Träger-Optimierung durchführen kann, Folgendes umfasst: Bestimmen, dass ein von dem ersten Endgerät des ersten Kontexts eingerichteter Träger der IP-Träger ist, und dass beide Endgeräte des ersten Kontexts keine IP-Träger-Optimierung durchgeführt haben; und
Bestimmen, dass das zweite Endgerät die IP-Träger-Optimierung durchführen kann, Folgendes umfasst: Bestimmen, dass ein von dem zweiten Endgerät des zweiten Kontexts eingerichteter Träger der IP-Träger ist, und dass beide Endgeräte des zweiten Kontexts keine IP-Träger-Optimierung durchgeführt haben.

4. Verfahren nach Anspruch 2, **dadurch gekennzeichnet, dass** nach dem Bestimmen des virtuellen Master-Medien-Gateways, dass sowohl das erste Endgerät als auch das zweite Endgerät eine IP-Träger-Optimierung durchführen können, das Verfahren ferner umfasst:
Entfernen einer Kontextverbindung im ersten Kontext und im zweiten Kontext, die dem virtuellen Master-Medien-Gateway entspricht, durch das virtuelle Master-Medien-Gateway, Freisetzen von Trägerressourcen des Endgeräts im ersten Endgerät und im zweiten Endgerät an einem lokalen Ende und Benachrichtigen des virtuellen Slave-Medien-Gateways, die andere Kontextverbindung im ersten Kontext und im zweiten Kontext zu entfernen und die Trägerressourcen des anderen Endgeräts im ersten Endgerät und im zweiten Endgerät freizusetzen; und
Verbinden eines dritten Endgeräts mit einem vierten Endgerät durch das virtuelle Master-Medien-Gateway, wobei das dritte Endgerät ein anderes Endgerät mit Ausnahme des ersten Endgeräts im ersten Kontext ist, das vierte Endgerät ein anderes Endgerät mit Ausnahme des zweiten Endgeräts im zweiten Kontext ist.

5. Verfahren nach Anspruch 4, **dadurch gekennzeichnet, dass** nach dem Verbinden eines dritten Endgerätes mit einem vierten Endgerät das Verfahren ferner Folgendes umfasst:
Empfangen einer Betriebsanweisung von einem Medien-Gateway-Controller durch ein anderes Endgerät mit Ausnahme des ersten Endgeräts oder des zweiten Endgeräts im Master-Kontext; und
Ausführen der Betriebsanweisung durch das andere Endgerät mit Ausnahme des ersten Endgeräts oder des zweiten Endgeräts im Master-Kontext, Nicht-Verbinden eines Kontexts und Durchführen des Verbindens gemäß einer Beziehung zwischen dem Master-Kontext und dem Slave-Kontext nach Aktualisieren der Betriebsinformationen;
wobei, wenn die Betriebsanweisung eine Verschiebeoperation ist, das virtuelle Master-Medien-Gateway das andere Endgerät mit Ausnahme des ersten Endgeräts oder des zweiten Endgeräts im Master-Kontext direkt aus dem Master-Kontext entfernt.

6. Verfahren nach Anspruch 4, **dadurch gekennzeichnet, dass** nach dem Verbinden eines dritten Endgerätes mit einem vierten Endgerät das Verfahren ferner Folgendes umfasst:
Empfangen einer Betriebsanweisung von einem Medien-Gateway-Controller durch das erste Endgerät oder das zweite Endgerät im Master-Kontext; und
Ausführen der Betriebsanweisung durch das erste Endgerät oder das zweite Endgerät im Master-Kontext und Durchführen der Verbindung gemäß einer Beziehung zwischen dem Master-Kontext und dem Slave-Kontext nach Aktualisieren der Betriebsinformationen;
wobei, wenn die Betriebsanweisung eine Verschiebeoperation ist, nach dem Verschieben des ersten Endgeräts oder des zweiten Endgeräts im Master-Kontext in einen anderen Kontext, das virtuelle Master-Medien-Gateway das virtuelle Slave-Medien-Gateway über die ID des anderen Kontexts benachrichtigt; und das virtuelle Slave-Medien-Gateway mit dem virtuellen Medien-Gateway interagiert, dem der andere Kontext entspricht, und einen neuen Master-Kontext und einen neuen Slave-Kontext bestimmt.

7. Verfahren nach Anspruch 4, **dadurch gekennzeichnet, dass** nach dem Verbinden eines dritten Endgerätes mit einem vierten Endgerät das Verfahren ferner Folgendes umfasst:
Empfangen einer Betriebsanweisung von einem Medien-Gateway-Controller durch ein anderes Endgerät mit Ausnahme des ersten Endgeräts oder des zweiten Endgeräts im Slave-Kontext; und
Ausführen der Betriebsanweisung durch das andere Endgerät mit Ausnahme des ersten Endgeräts oder des zweiten Endgeräts im Slave-Kontext, Nicht-Verbinden eines Kontexts und Benachrichtigen des virtuellen Master-Medien-Gateways nach dem Aktualisieren der Betriebsinformationen; und Durchführen des Verbindens durch das virtuelle Master-Medien-Gateway gemäß einer Beziehung zwischen dem Master-Kontext und dem Slave-Kontext;
wobei, wenn die Betriebsanweisung eine Verschiebeoperation ist, das virtuelle Slave-Medien-Gateway das virtuelle Master-Medien-Gateway benachrichtigt, nachdem das andere Endgerät außer dem ersten Endgerät oder dem zweiten Endgerät im Slave-Kontext aus dem Slave-Kontext entfernt wurde.

8. Verfahren nach Anspruch 4, **dadurch gekennzeichnet, dass** nach dem Verbinden eines dritten Endgerätes mit einem vierten Endgerät das Verfahren ferner Folgendes umfasst:
Empfangen einer Betriebsanweisung von einem Medien-Gateway-Controller durch das erste Endgerät oder das zweite Endgerät im Slave-Kontext; und
Ausführen der Betriebsanweisung durch das erste Endgerät oder das zweite Endgerät im Slave-Kontext und Benachrichtigen des virtuellen Master-Medien-Gateways nach dem Aktualisieren der Betriebsinformationen; und Durchführen einer Verbindung durch das virtuelle Master-Medien-Gateway gemäß einer Beziehung zwischen dem Master-Kontext und dem Slave-Kontext;
wobei, wenn die Betriebsanweisung eine Verschiebeoperation ist, nach dem Verschieben des ersten Endgeräts oder des zweiten Endgeräts im Slave-Kontext in einen anderen Kontext, das virtuelle Slave-Medien-Gateway das virtuelle Master-Medien-Gateway über die ID des anderen Kontexts benachrichtigt; und das virtuelle Master-Medien-Gateway mit dem virtuellen Medien-Gateway interagiert, dem der andere Kontext entspricht, und einen neuen Master-Kontext und einen neuen Slave-Kontext bestimmt.

9. Verfahren nach Anspruch 4, **dadurch gekennzeichnet, dass** nach dem Benachrichtigen des virtuellen Slave-Medien-Gateways, die andere Kontextverbindung im ersten Kontext und im zweiten Kontext zu entfernen und die Trägerressourcen des anderen Endgerätes im ersten Endgerät und im zweiten Endgerät freizusetzen, das Verfahren ferner umfasst: Entfernen der anderen Kontextverbindung im zweiten Kontext und im ersten Kontext durch das virtuelle Slave-Medien-Gateway und Freisetzen der Trägerressourcen des anderen Endgerätes im zweiten Endgerät und im ersten Endgerät.

10. Verfahren nach einem der Ansprüche 4 bis 9, **dadurch gekennzeichnet, dass** das Verfahren bei dem Freisetzen der Trägerressourcen des ersten Endgeräts oder des zweiten Endgeräts ferner umfasst: Bestimmen, ob ein Kodierkonverter in dem ersten Endgerät oder dem zweiten Endgerät vorhanden ist; und wenn ja, Freisetzen des Kodierkonverters.

11. Vorrichtung zum Bestimmen der Internetprotokoll-, IP-, Träger-Optimierung, die in einem virtuellen Medien-Gateway umfasst ist, umfassend:
ein Bestimmungsmodul (22), das so konfiguriert ist, dass es bei dem Einrichten eines IP-Trägers für ein erstes Endgerät bestimmt, dass sich das erste Endgerät und ein zweites Endgerät gemäß Trägerinformationen des zweiten Endgeräts an demselben physischen Medien-Gateway befinden, wobei das zweite Endgerät ein gegenüberliegendes Ende des ersten Endgeräts ist, wobei die Trägerinformationen des zweiten Endgeräts umfassen: IP-Adresse und die Anschlussnummer;
ein Interaktionsmodul (24), das so konfiguriert ist, dass es mit einem virtuellen Medien-Gateway am gegenüberliegenden Ende interagiert; und
ein erstes Beurteilungsmodul (10), das so konfiguriert ist, dass es bestimmt, ob sowohl das erste Endgerät als auch das zweite Endgerät eine IP-Träger-Optimierung durchführen können.

12. Vorrichtung nach Anspruch 11, **dadurch gekennzeichnet, dass** sie ferner Folgendes umfasst:
ein erstes Entfernungsmodul (20), das so konfiguriert ist, dass es, wenn das erste Beurteilungsmodul bestimmt, dass sowohl das erste Endgerät als auch das zweite Endgerät eine IP-Träger-Optimierung durchführen können, eine Kontextverbindung in einem ersten Kontext und einem zweiten Kontext, die dem virtuellen Medien-Gateway an einem lokalen Ende entsprechen, entfernt und Trägerressourcen eines Endgeräts in dem ersten Endgerät und dem zweiten Endgerät auf dem virtuellen Medien-Gateway an dem lokalen Ende freisetzt;
ein Benachrichtigungsmodul (30), das so konfiguriert ist, dass es, wenn das erste Beurteilungsmodul bestimmt, dass sowohl das erste Endgerät als auch das zweite Endgerät eine IP-Träger-Optimierung durchführen können, das virtuelle Medien-Gateway am gegenüberliegenden Ende benachrichtigt, um die Kontextverbindung im zweiten Kontext und im ersten Kontext, die dem virtuellen Medien-Gateway am gegenüberliegenden Ende entspricht, zu entfernen und die Trägerressourcen des Endgeräts im ersten Endgerät und im zweiten Endgerät am virtuellen Medien-Gateway am gegenüberliegenden Ende freizusetzen;
ein Verbindungsmodul (40), das so konfiguriert ist, dass es ein anderes Endgerät mit Ausnahme des ersten Endgeräts in dem ersten Kontext mit einem anderen Endgerät mit Ausnahme des zweiten Endgeräts in dem zweiten Kontext verbindet; und
ein Empfangsmodul (50), das so konfiguriert ist, dass es eine Benachrichtigung von dem Benachrichtigungsmodul empfängt.

13. System zum Bestimmen der IP-Träger-Optimierung für virtuelle Mediengateways, umfassend:
ein erstes virtuelles Medien-Gateway (2), das eine Vorrichtung nach Anspruch 11 umfasst; und
ein zweites virtuelles Medien-Gateway (4), umfassend:
ein Interaktionsmodul (42), das so konfiguriert ist, dass es mit einem virtuellen Medien-Gateway des gegenüberliegenden Endes interagiert und bestimmt, dass eines von dem ersten virtuellen Medien-Gateway (2) und dem zweiten virtuellen Medien-Gateway (4) ein virtuelles Master-Medien-Gateway ist und das andere ein virtuelles Slave-Medien-Gateway ist;
wobei das Interaktionsmodul (24) der Vorrichtung des ersten virtuellen Medien-Gateways (2) ferner so konfiguriert ist, dass es bestimmt, dass eines von dem ersten virtuellen Medien-Gateway (2) und dem zweiten virtuellen Medien-Gateway (4) ein virtuelles Master-Medien-Gateway und das andere ein virtuelles Slave-Medien-Gateway ist; und
wobei das virtuelle Master-Medien-Gateway Folgendes umfasst:
ein erstes Beurteilungsmodul (10), das so konfiguriert ist, dass es bestimmt, ob sowohl das erste Endgerät als auch das zweite Endgerät eine IP-Träger-Optimierung durchführen können.

14. System nach Anspruch 13, **dadurch gekennzeichnet, dass** das virtuelle Master-Medien-Gateway ferner Folgendes umfasst:
ein erstes Entfernungsmodul (20), das so konfiguriert ist, dass es, wenn das erste Beurteilungsmodul (10) bestimmt, dass sowohl das erste Endgerät als auch das zweite Endgerät eine IP-Träger-Optimierung durchführen können, Entfernen einer Kontextverbindung im ersten Kontext und im zweiten Kontext, die dem virtuellen Master-Medien-Gateway entspricht, auslöst und Trägerressourcen eines Endgeräts im ersten Endgerät und im zweiten Endgerät auf dem virtuellen Master-Medien-Gateway freisetzt;
ein Benachrichtigungsmodul (30), das so konfiguriert ist, dass es, wenn das erste Beurteilungsmodul (10) bestimmt, dass sowohl das erste Endgerät als auch das zweite Endgerät eine IP-Träger-Optimierung durchführen können, das virtuelle Slave-Mediengateway benachrichtigt, um die Kontextverbindung im zweiten Kontext und im ersten Kontext, die dem virtuellen Slave-Mediengateway entspricht, zu entfernen und die Trägerressourcen des Endgeräts im ersten Endgerät und im zweiten Endgerät auf dem virtuellen Slave-Mediengateway freizusetzen; und
ein Verbindungsmodul (40), das so konfiguriert ist, dass es ein anderes Endgerät mit Ausnahme des ersten Endgeräts in dem ersten Kontext mit einem anderen Endgerät mit Ausnahme des zweiten Endgeräts in dem zweiten Kontext verbindet; und
wobei das virtuelle Slave-Medien-Gateway Folgendes umfasst:
ein Empfangsmodul (50), das so konfiguriert ist, dass es eine Benachrichtigung von dem Benachrichtigungsmodul empfängt und ein zweites Entfernungsmodul auslöst; und
das zweite Entfernungsmodul (60), das so konfiguriert ist, dass es die Kontextverbindung im zweiten Kontext und im ersten Kontext, die dem virtuellen Slave-Media-Gateway entspricht, entfernt und die Trägerressourcen des Endgeräts im zweiten Endgerät und im ersten Endgerät auf dem virtuellen Slave-Media-Gateway freisetzt.

15. System nach Anspruch 14, **dadurch gekennzeichnet, dass** das virtuelle Slave-Medien-Gateway ferner Folgendes umfasst:
ein zweites Beurteilungsmodul, das so konfiguriert ist, dass es bestimmt, ob das Endgerät in dem ersten Endgerät und dem zweiten Endgerät auf dem virtuellen Slave-Medien-Gateway eine IP-Träger-Optimierung durchführen kann, und das virtuelle Master-Medien-Gateway über das interagierende Modul des virtuellen Slave-Medien-Gateways über ein Bestimmungsergebnis informiert; und wobei
das erste Beurteilungsmodul (10) so konfiguriert ist, dass es bestimmt, ob das Endgerät in dem ersten Endgerät und dem zweiten Endgerät auf dem virtuellen Master-Medien-Gateway eine IP-Träger-Optimierung durchführen kann, und lernt, ob das Endgerät in dem ersten Endgerät und dem zweiten Endgerät auf dem virtuellen Slave-Medien-Gateway eine IP-Träger-Optimierung gemäß der Interaktion zwischen dem interagierenden Modul des virtuellen Master-Medien-Gateways und dem virtuellen Slave-Medien-Gateway durchführen kann.

## Revendications

1. Procédé pour déterminer une optimisation de support de protocole Internet, IP, réalisé par une passerelle média virtuelle, comprenant :
la détermination, par une première passerelle média virtuelle lors de l'établissement d'un support IP pour un premier terminal, que le premier terminal et un deuxième terminal sont situés au niveau d'une même passerelle média physique selon des informations de support du deuxième terminal, dans lequel le deuxième terminal est une extrémité opposée du premier terminal, les informations de support du deuxième terminal comprennent : une adresse IP et le numéro de port ; et
l'interaction, par la première passerelle média virtuelle, avec une seconde passerelle média virtuelle à laquelle appartient le deuxième terminal, et la détermination, par une passerelle média virtuelle maîtresse, qu'à la fois le premier terminal et le deuxième terminal peuvent réaliser une optimisation de support IP, dans lequel la passerelle média virtuelle maîtresse est l'une de la première passerelle média virtuelle et de la seconde passerelle média virtuelle.

2. Procédé selon la revendication 1, **caractérisé en ce que** la détermination, par la passerelle média virtuelle maîtresse, qu'à la fois le premier terminal et le deuxième terminal peuvent réaliser une optimisation de support IP comprend :
l'interaction, par la première passerelle média virtuelle, avec la seconde passerelle média virtuelle, et la détermination, par la première passerelle média virtuelle, qu'un premier contexte ou un second contexte est un contexte maître, dans lequel la passerelle média virtuelle à laquelle appartient le contexte maître est la passerelle média virtuelle maîtresse, l'autre contexte est un contexte esclave, et la passerelle média virtuelle à laquelle appartient le contexte esclave est une passerelle média virtuelle esclave ;
la détermination, par la passerelle média virtuelle maîtresse, qu'un terminal, dans le premier terminal et le deuxième terminal, sur la passerelle média virtuelle maîtresse peut réaliser une optimisation de support IP, et la notification, à la passerelle média virtuelle maîtresse, de la passerelle média virtuelle esclave pour rapporter des informations de contexte esclave ; et
la détermination, par la passerelle média virtuelle esclave, qu'un terminal, du premier terminal et du deuxième terminal, sur la passerelle média virtuelle esclave peut réaliser une optimisation de support IP, la notification à la passerelle média virtuelle maîtresse, et le rapport les informations de contexte esclave à la passerelle média virtuelle maîtresse.

3. Procédé selon la revendication 2, **caractérisé en ce que**
la détermination que le premier terminal peut réaliser une optimisation de support IP comprend : la détermination qu'un support établi par le premier terminal du premier contexte est le support IP, et que les deux terminaux du premier contexte n'ont pas réalisé d'optimisation de support IP ; et
la détermination que le deuxième terminal peut réaliser une optimisation de support IP comprend : la détermination qu'un support établi par le deuxième terminal du second contexte est le support IP, et que les deux terminaux du second contexte n'ont pas réalisé d'optimisation de support IP.

4. Procédé selon la revendication 2, **caractérisé en ce qu'**après que la passerelle média virtuelle maîtresse a déterminé qu'à la fois le premier terminal et le deuxième terminal peuvent réaliser une optimisation de support IP, le procédé comprend en outre :
la suppression, par la passerelle média virtuelle maîtresse, d'une connexion de contexte, dans le premier contexte et le second contexte, correspondant à la passerelle média virtuelle maîtresse, la libération de ressources de support du terminal, dans le premier terminal et le deuxième terminal, à une extrémité locale, et la notification à la passerelle média virtuelle esclave de supprimer l'autre connexion de contexte dans le premier contexte et le second contexte et de libérer les ressources de support de l'autre terminal dans le premier terminal et le deuxième terminal ; et
la connexion, par la passerelle média virtuelle maîtresse, d'un troisième terminal avec un quatrième terminal, dans lequel le troisième terminal est un autre terminal à l'exception du premier terminal dans le premier contexte, le quatrième terminal est un autre terminal à l'exception du deuxième terminal dans le second contexte.

5. Procédé selon la revendication 4, **caractérisé en ce qu'**après la connexion d'un troisième terminal avec un quatrième terminal, le procédé comprend en outre :
la réception, par un autre terminal à l'exception du premier terminal ou du deuxième terminal dans le contexte maître d'une instruction d'exploitation en provenance d'un contrôleur de passerelle média ; et
l'exécution, par l'autre terminal à l'exception du premier terminal ou du deuxième terminal dans le contexte maître de l'instruction d'exploitation, ne connectant pas un contexte, et la réalisation de la connexion selon une relation entre le contexte maître et le contexte esclave après la mise à jour d'informations d'exploitation ;
dans lequel si l'instruction d'exploitation est une opération de déplacement, la passerelle média virtuelle maîtresse supprime directement l'autre terminal à l'exception du premier terminal ou du deuxième terminal dans le contexte maître du contexte maître.

6. Procédé selon la revendication 4, **caractérisé en ce qu'**après la connexion d'un troisième terminal avec un quatrième terminal, le procédé comprend en outre :
la réception, par le premier terminal ou le deuxième terminal dans le contexte maître d'une instruction d'opération en provenance d'un contrôleur de passerelle média ; et
l'exécution, par le premier terminal ou le deuxième terminal dans le contexte maître de l'instruction d'exploitation, et la réalisation de la connexion selon une relation entre le contexte maître et le contexte esclave après la mise à jour d'informations d'exploitation ;
dans lequel si l'instruction d'exploitation est une opération de déplacement, après le déplacement du premier terminal ou du deuxième terminal dans le contexte maître vers un autre contexte, la passerelle média virtuelle maîtresse notifie à la passerelle média virtuelle esclave l'ID de l'autre contexte ; et la passerelle média virtuelle esclave interagit avec la passerelle média virtuelle à laquelle correspond l'autre contexte, et détermine un nouveau contexte maître et un nouveau contexte esclave.

7. Procédé selon la revendication 4, **caractérisé en ce qu'**après la connexion d'un troisième terminal avec un quatrième terminal, le procédé comprend en outre :
la réception, par un autre terminal à l'exception du premier terminal ou du deuxième terminal dans le contexte esclave, d'une instruction d'exploitation en provenance d'un contrôleur de passerelle média ; et
l'exécution, par l'autre terminal à l'exception du premier terminal ou du deuxième terminal dans le contexte esclave de l'instruction d'exploitation, ne connectant pas un contexte, et la notification de la passerelle média virtuelle maîtresse après la mise à jour d'informations d'exploitation ; et la passerelle média virtuelle maîtresse réalisant la connexion selon une relation entre le contexte maître et le contexte esclave ;
dans lequel si l'instruction d'exploitation est une opération de déplacement, la passerelle média virtuelle esclave notifie la passerelle média virtuelle maîtresse après la suppression de l'autre terminal à l'exception du premier terminal ou du deuxième terminal dans le contexte esclave du contexte esclave.

8. Procédé selon la revendication 4, **caractérisé en ce qu'**après la connexion d'un troisième terminal avec un quatrième terminal, le procédé comprend en outre :
la réception, par le premier terminal ou le deuxième terminal dans le contexte esclave, d'une instruction d'opération en provenance d'un contrôleur de passerelle média ; et
l'exécution, par le premier terminal ou le deuxième terminal dans le contexte esclave, de l'instruction d'exploitation, et la notification de la passerelle média virtuelle maîtresse après la mise à jour d'informations d'exploitation ; et la réalisation, par la passerelle média virtuelle maîtresse de la connexion selon une relation entre le contexte maître et le contexte esclave ;
dans lequel si l'instruction d'exploitation est une opération de déplacement, après le déplacement du premier terminal ou du deuxième terminal dans le contexte esclave vers un autre contexte, la passerelle média virtuelle esclave notifie à la passerelle média virtuelle maîtresse l'ID de l'autre contexte ; et la passerelle média virtuelle maîtresse interagit avec la passerelle média virtuelle à laquelle correspond l'autre contexte, et détermine un nouveau contexte maître et un nouveau contexte esclave.

9. Procédé selon la revendication 4, **caractérisé en ce qu'**après la notification à la passerelle média virtuelle esclave de supprimer l'autre connexion de contexte dans le premier contexte et le second contexte et de libérer les ressources de support de l'autre terminal dans le premier terminal et le deuxième terminal, le procédé comprend en outre : la suppression par la passerelle média virtuelle esclave de l'autre connexion de contexte dans le second contexte et le premier contexte, et la libération des ressources de support de l'autre terminal dans le deuxième terminal et le premier terminal.

10. Procédé selon l'une quelconque des revendications 4 à 9, **caractérisé en ce que** lors de la libération des ressources de support du premier terminal ou du deuxième terminal, le procédé comprend en outre : la détermination de s'il y a un convertisseur d'encodage dans le premier terminal ou le deuxième terminal ; et si oui, la libération du convertisseur d'encodage.

11. Dispositif pour déterminer une optimisation de support de protocole Internet, IP, compris dans une passerelle média virtuelle, comprenant :
un module de détermination (22), configuré pour déterminer, lors de l'établissement d'un support IP pour un premier terminal, que le premier terminal et un deuxième terminal sont situés au niveau d'une même passerelle média physique selon des informations de support du deuxième terminal, dans lequel le deuxième terminal est une extrémité opposée du premier terminal, les informations de support du deuxième terminal comprennent : une adresse IP et le numéro de port ;
un module d'interaction (24), configuré pour interagir avec une passerelle média virtuelle à l'extrémité opposée ; et
un premier module de jugement (10), configuré pour déterminer si à la fois le premier terminal et le deuxième terminal peuvent réaliser une optimisation de support IP.

12. Dispositif selon la revendication 11, **caractérisé en ce qu'**il comprend en outre :
un premier module de suppression (20), configuré pour, lorsque le premier module de jugement détermine qu'à la fois le premier terminal et le deuxième terminal peuvent réaliser une optimisation de support IP, supprimer une connexion de contexte, dans un premier contexte et un second contexte, correspondant à la passerelle média virtuelle à une extrémité locale, et libérer des ressources de support d'un terminal, dans le premier terminal et le deuxième terminal, sur la passerelle média virtuelle à l'extrémité locale ;
un module de notification (30), configuré pour, lorsque le premier module de jugement détermine qu'à la fois le premier terminal et le deuxième terminal peuvent réaliser une optimisation de support IP, notifier à la passerelle média virtuelle à l'extrémité opposée de supprimer la connexion de contexte, dans le deuxième contexte et le premier contexte, correspondant à la passerelle média virtuelle à l'extrémité opposée, et de libérer les ressources de support du terminal, dans le premier terminal et le deuxième terminal, sur la passerelle média virtuelle à l'extrémité opposée ;
un module de connexion (40), configuré pour connecter un autre terminal à l'exception du premier terminal dans le premier contexte avec un autre terminal à l'exception du deuxième terminal dans le second contexte ; et
un module de réception (50), configuré pour recevoir une notification en provenance du module de notification.

13. Système pour déterminer une optimisation de support IP pour des passerelles médias virtuelles, comprenant :
une première passerelle média virtuelle (2), qui comprend un dispositif selon la revendication 11 ; et
une seconde passerelle média virtuelle (4) comprenant :
un module d'interaction (42), configuré pour interagir avec une passerelle média virtuelle de l'extrémité opposée, et déterminer que l'une de la première passerelle média virtuelle (2) et de la seconde passerelle média virtuelle (4) est une passerelle média virtuelle maîtresse, et l'autre est une passerelle média virtuelle esclave ;
dans lequel le module d'interaction (24) du dispositif de la première passerelle média virtuelle (2) est en outre configuré pour déterminer que l'une de la première passerelle média virtuelle (2) et de la seconde passerelle média virtuelle (4) est une passerelle média virtuelle maîtresse, et l'autre est une passerelle média virtuelle esclave ; et
la passerelle média virtuelle maîtresse comprend :
un premier module de jugement (10), configuré pour déterminer si à la fois le premier terminal et le deuxième terminal peuvent réaliser une optimisation de support IP.

14. Système selon la revendication 13, **caractérisé en ce que**
la passerelle média virtuelle maîtresse comprend en outre :
un premier module de suppression (20), configuré pour déclencher, lorsque le premier module de jugement (10) détermine qu'à la fois le premier terminal et le deuxième terminal peuvent réaliser une optimisation de support IP, la suppression d'une connexion de contexte, dans le premier contexte et le second contexte, correspondant à la passerelle média virtuelle maîtresse, et la libération de ressources de support d'un terminal, dans le premier terminal et le deuxième terminal, sur la passerelle média virtuelle maîtresse ;
un module de notification (30), configuré pour déclencher, lorsque le premier module de jugement (10) détermine qu'à la fois le premier terminal et le deuxième terminal peuvent réaliser une optimisation de support IP, la notification à la passerelle média virtuelle esclave de supprimer la connexion de contexte, dans le second contexte et le premier contexte, correspondant à la passerelle média virtuelle esclave, et de libérer les ressources de support du terminal, dans le premier terminal et le deuxième terminal, sur la passerelle média virtuelle esclave ; et
un module de connexion (40), configuré pour connecter un autre terminal à l'exception du premier terminal dans le premier contexte avec un autre terminal à l'exception du deuxième terminal dans le second contexte ; et
la passerelle média virtuelle esclave comprend :
un module de réception (50), configuré pour recevoir une notification en provenance du module de notification, et déclencher un second module de suppression ; et
le second module de suppression (60), configuré pour supprimer la connexion de contexte, dans le second contexte et le premier contexte, correspondant à la passerelle média virtuelle esclave, et libérer les ressources de support du terminal, dans le deuxième terminal et le premier terminal, sur la passerelle média virtuelle esclave.

15. Système selon la revendication 14, **caractérisé en ce que**
la passerelle média virtuelle esclave comprend en outre :
un second module de jugement, configuré pour déterminer si le terminal, dans le premier terminal et le deuxième terminal, sur la passerelle média virtuelle esclave peut réaliser une optimisation de support IP, et notifier à la passerelle média virtuelle maîtresse un résultat de détermination par l'intermédiaire du module d'interaction de la passerelle média virtuelle esclave ; et dans lequel
le premier module de jugement (10) est configuré pour déterminer si le terminal, dans le premier terminal et le deuxième terminal, sur la passerelle média virtuelle maîtresse peut réaliser une optimisation de support IP, et apprendre si le terminal, dans le premier terminal et le deuxième terminal, sur la passerelle média virtuelle esclave peut réaliser une optimisation de support IP selon l'interaction entre le module d'interaction de la passerelle média virtuelle maîtresse et la passerelle média virtuelle esclave.
